# EUROPÄISCHE PATENTANMELDUNG

(11) **EP 2 495 836 A1**
(43) Veröffentlichungstag der Anmeldung: **05.09.2012**
(21) Anmeldenummer: 11156432.4
(22) Anmeldetag: 01.03.2011
(51) Int. Cl.: H02H 5/04, H02H 3/16, H02H 7/22

(54) **Erdungsanlagenschutz in Trafostationen**

(71) Anmelder: Siemens AG Österreich, 1210 Wien (AT)
(72) Erfinder: Blazovnik, Franz, 8143, Dobl (AT)
(74) Vertreter: Maier, Daniel Oliver

(57) **Zusammenfassung**

Überstrom-Schutzvorrichtung für eine Erdungsvorrichtung einer elektrischen Maschine, insbesondere eines Transformators (21) in einer Transformatorstation, umfassend:
- eine Erdungsleiter-Struktur (22),
- eine Erfassungseinrichtung (1), die den im Falle eines Kurzschlusses zwischen einem stromführenden Leiter (16) und einem Anlagenteil (20) der elektrischen Maschine in der Erdungsleiter-Struktur (22) fließenden Erdkurzschlussstrom erfasst und ein Abschaltsignal erzeugt,
- eine Abschalteinrichtung (3), der das Abschaltsignal zugeführt ist, um im Falle eines Erdkurzschlusses die elektrische Maschine von der Energiezufuhr zu trennen, **wobei** die Erfassungseinrichtung (1) ein Strahlungsthermometer aufweist, welches zum Erfassen der im Falle eines Erdkurzschlusses in einem Überwachungsabschnitt (23) der Erdungsleiter-Struktur (22) erzeugten Wärmestrahlung (17) eingerichtet ist.

## Beschreibung

### Technisches Gebiet

Die Erfindung betrifft eine Schutzeinrichtung für eine Erdungsvorrichtung einer elektrischen Maschine, insbesondere eines Transformators in einer Transformatorstation, mit einer Erdungsleiter-Struktur, einer Erfassungseinrichtung, die den im Falle eines Kurzschlusses zwischen einem stromführenden Leiter und einem geerdeten Anlagenteil der elektrischen Maschine den in der Erdungsleiter-Struktur fließenden Erdkurzschlussstrom erfasst und ein Abschaltsignal erzeugt, und einer Abschalteinrichtung, der das Abschaltsignal zugeführt ist, um im Falle eines Erdkurzschlusses die elektrische Maschine von der Energiezufuhr zu trennen.

### Stand der Technik

Es ist bekannt, zum Schutz von Personen- und Sachschäden aktive Anlagenteile einer elektrischen Maschine durch Erdungsleiter mit Erde zu verbinden und im Falle eines Erdkurzschlusses die Energiezufuhr zur elektrischen Maschine zu unterbrechen.

Auch elektrische Ortsnetztransformatoren in Energie-Verteilungsnetzen werden auf diese Weise geschützt. Die Trennung vom Netz erfolgt üblicherweise durch so genannte Hochspannungs-Hochleistungs-Sicherungen, kurz HH-Sicherung, die zwischen dem Transformator und einem Sicherungs-Lasttrennschalter in der Hochspannungsanlage angeordnet sind. Eine HH-Sicherung ist eine Schmelzsicherung, die zur Begrenzung der Auswirkung von Überströmen (Kurzschlüssen) dient. Kommt es zu einem Kurzschluss, so schmilzt der im Inneren der Sicherung befindliche Schmelzleiter und veranlasst über einen Wirkmechanismus ein allpoliges Abschalten durch einen Lasttrennschalter.

Die Trennung vom Netz erfolgt nicht unmittelbar, sondern erst nach einer bestimmten Verzögerungszeit, die unter anderem von der Zeit für den Schmelzvorgang bestimmt wird. Während dieser Ansprechzeit oder Reaktionszeit muss die Erdungsanlage im Stande sein, den Erdkurzschlussstrom ohne selbst Schaden zu nehmen zur Erde abzuleiten. Kommt es im Falle eines einpoligen Erdkurzschlusses zum Schmelzen eines Erdungsleiters, so ist der Stromfluss zur Erde unterbrochen. Wenn nun die Schmelzsicherung, aufgrund ihrer immanenten Trägheit nicht zu Abschaltung führt, steht am Transformatorgehäuse eine elektrische Spannung an, die ein hohes Gefährdungspotenzial für Personen darstellt.

Um diesem Gefährdungspotenzial entgegen zu treten, hat man bislang den Leitungsquerschnitt im Strompfad des Kurzschlussstromes mit einem ausreichend großen Leitungsquerschnitt bemessen. Bei einem Verteiltransformator bedeutet dies, dass die Erdleiter für einen Dauerkurzschlussstrom von mehreren 1000 A ausgelegt sein müssen. Dies ist aufwändig.

Um den Erdkurzschluss zu erfassen, werden für Transformatoren verschiedene Erfassungsvorrichtungen, wie beispielsweise Differenzialschutz oder Buchholz-Schutz verwendet. Diese Schutzeinrichtungen sind aber ebenfalls teuer.

### Darstellung der Erfindung

Es ist eine Aufgabe der vorliegenden Erfindung, eine Vorrichtung zum Schutz einer Erdungsvorrichtung und ein Verfahren zum Ausnutzen der thermischen Belastungsgrenze einer Erdungsvorrichtung so anzugeben, dass das Risiko für Personen- und Sachschäden geringer ist, gleichzeitig aber der technische Aufwand möglichst gering ist.

Diese Aufgabe wird durch Bereitstellung einer Schutzvorrichtung für eine Erdungsvorrichtung mit den Merkmalen des Anspruchs 1, beziehungsweise durch ein Verfahren mit den Merkmalen des Anspruchs 10, sowie durch ein Verfahren zum Umrüsten einer bestehenden Erdungsvorrichtung gemäß den Merkmalen des Anspruchs 15 gelöst.

Vorteilhafte Ausgestaltungen der Erfindung sind in den jeweils abhängigen Ansprüchen definiert.

Die Erfindung ist durch eine Messeinrichtung gekennzeichnet, die als Strahlungsthermometer ausgebildet ist, welches zum Erfassen der im Falle eines Erdkurzschlusses in einem Überwachungsabschnitt einer Erdungsleiter-Struktur erzeugten Wärmestrahlung eingerichtet ist. Die Erfindung sieht also vor, den Erdkurzschlussstrom nicht direkt, sondern indirekt durch die, von einem Erdungsleiterstück abgestrahlte Wärmestrahlung berührungslos zu messen bzw. zu überwachen und bei Überschreiten einer vorgegebenen Schranke eine Trenneinrichtung zum Abschalten der elektrischen Maschine zu veranlassen. Eine solche Schranke kann eine Grenztemperatur oder eine Anstieggeschwindigkeit der Temperatur in dem Überwachungsabschnitt eines Erdungsleiters sein.

In einer bevorzugten Ausführungsform kann der Erdungsleiter ein so genannter Potentialausgleichsleiter sein, der einerseits direkt an einem zu schützenden Anlagenteil einer elektrischen Maschine, z.B. an das Gehäuse eines Transformators, angeschlossen ist, und mit seinem anderen Ende mit der Erdungsleiter-Struktur selbst und damit mit dem örtlich vom Transformator entfernten Erdungspunkt verbunden ist. Mit einem Wärmestrahlungsthermometer, oder auch Pyrometer genannt, kann der Erdkurzschlussstrom technisch einfach überwacht werden. Ein Wärmestrahlungsthermometer hat eine kurze Reaktionszeit. Dadurch kann ein Kurzschluss sehr schnell erfasst und ein entsprechend schnelles Abschaltsignal an den Lasttrennschalter signalisiert werden. Dadurch kann der Transformator ausreichend schnell vom Versorgungsnetz genommen werden, ohne dass die Erdungsanlage in der Trafostation Schaden nimmt. Da es nicht zu Unterbrechungen von Erdungsleitern kommt, kommt es auch nicht zum Anstehen einer gefährlichen Berührspannung am Transformatorgehäuse. Die Trennung erfolgt nämlich schon bevor die HH-Sicherung auslöst. Die im Fehlerfall den Erdkurzschlussstrom führenden Leiter der Erdungsanlage können mit einem geringeren Querschnitt ausgebildet werden, da aufgrund der kürzeren Reaktionszeit des Erdungsanlagenschutzes die thermische Belastung geringer ist. Dies macht die Herstellung der Erdungsvorrichtung insgesamt kostengünstiger.

Mit Vorteil erfasst das Wärmestrahlungsthermometer die Änderungsgeschwindigkeit der emittierten Wärmestrahlung und signalisiert an den Leistungsschalter ein Abschaltsignal, sobald die Strahlungsänderung, das heißt der Temperaturgradient, einen einstellbaren Schwellwert am Strahlungsthermometer überschritten hat. Dadurch kann die Auslöseschwelle an örtliche Gegebenheiten sehr gut angepasst werden.

Es ist günstig, wenn der Überwachungsabschnitt den größten ohmschen Widerstand im Strompfad des Erdkurzschlusses bildet. Dadurch erreicht man, dass die Überwachung in jenem Bereich der Erdungsanlage erfolgt, in welchem die thermisch stärkste Belastung im Fehlerfall zu erwarten ist. Der Überwachungsabschnitt kann beispielsweise ein Abschnitt im Erdleiter-System sein, der den geringsten Querschnitt aufweisen. In einer Trafostationen kann dies örtlich die Erdung des Sternpunktes oder auch der Hauptpotenzialausgleich sein.

In einer bevorzugten Ausführung kann vorgesehen sein, dass die Wärmestrahlung von einer Emissionsschicht vorgegeben wird, die mit dem Potentialausgleichsleiter wärmeleitend verbunden ist. Dadurch kann der Emissionsgrad vorgegeben und kalkuliert werden. Die Wärmestrahlung ist unabhängig von verwendetem Material der Erdleiter und deren Oberflächenbeschaffenheit. Unerwünschte Änderungen der Wärmeemission, die durch Alterung oder Oxidation der Oberfläche des Leiters hervorgerufen werden können, sind dadurch geringer. Die Erfassungseinrichtung braucht dann über eine lange Betriebszeit nicht justiert zu werden. Die Ausbildung einer solchen Emissionsschicht kann durch Beschichten oder durch Anbringung eines Emissions-Streifens erfolgen, z.B. mit einer wärmeleitenden Klebstoffschicht oder mit einer Wärmeleitpaste.

Um elektromagnetische Störungen von der Erfassungseinrichtung fernzuhalten kann es günstig sein, die Erfassungseinrichtung in einem Gehäuse unterzubringen, welches neben einem mechanischen Schutz auch gleichzeitig einen elektromagnetischen Schirm bildet.

Um andere störende Umwelteinflüsse abzuschirmen, kann es vorteilhaft sein, das Gehäuse luftdicht auszubilden.

In einer bevorzugten Ausführungsform ist der Überwachungsabschnitt des Potentialausgleichsleiters ein Kupferleiter, mit einem Querschnitt von kleiner als 50 mm² und die übrigen Erdleiter eine Aluminiumsschiene, mit einem Querschnitt von etwa 125 mm².

Die Erfindung betrifft auch Verfahren zur Ausnutzung der thermischen Belastungsgrenze einer Erdungsvorrichtung, welche zum Schutz einer elektrischen Maschine, insbesondere eines Transformators in einer Transformatorstation vorgesehen ist, umfassend folgende Schritte:
- Erfassen der Wärmestrahlung, die im Falle eines Erdkurzschlusses von einem Überwachungsabschnitt einer Erdungsleiter-Struktur der Erdungsvorrichtung abgestrahlt wird, wobei ein Wärmestrahlungsthermometer verwendet wird;
- Erzeugen eines Abschaltsignals durch das Wärmestrahlungsthermometer, sobald die Wärmestrahlung einen vorgebbaren Schwellwert überschreitet;
- Übermitteln des Abschaltsignals an eine

Abschaltungsrichtung, um im Falle eines Erdkurzschlusses die Energiezufuhr zur elektrischen Maschine zu trennen.

Dieses Verfahren ermöglicht es, dass die einzelnen Leiter der Erdungsvorrichtung besser ausgenutzt werden. Sie können mit einem geringeren Querschnitt als bislang ausgeführt werden, da ein im Fehlerfall auftretender Überstrom genügend schnell abgeschaltet werden kann, bevor es zu einem Schmelzen der Leiter kommen kann.

### Kurzbeschreibung der Zeichnungen

Zur weiteren Erläuterung der Erfindung wird im nachfolgenden Teil der Beschreibung auf die Zeichnungen Bezug genommen, aus denen weitere vorteilhafte Ausgestaltungen, Einzelheiten und Weiterbildungen der Erfindung anhand eines nicht einschränkenden Ausführungsbeispiels zu entnehmen sind.

Es zeigen:
- Figur 1: eine schematische Darstellung einer Erdungsanlage in einer Transformatorstation, bei der zum Schutz vor thermischer Zerstörung gemäß der Erfindung ein Strahlungsthermometer mit Grenzwertüberwachung eingesetzt wird;
- Figur 2: eine schematische Darstellung, welche ein Strahlungsthermometer zeigt, dass zur Messung der von einer Erdungssschiene im Fehlerfall emittierten Wärmestrahlung eingerichtet ist.

### Ausführung der Erfindung

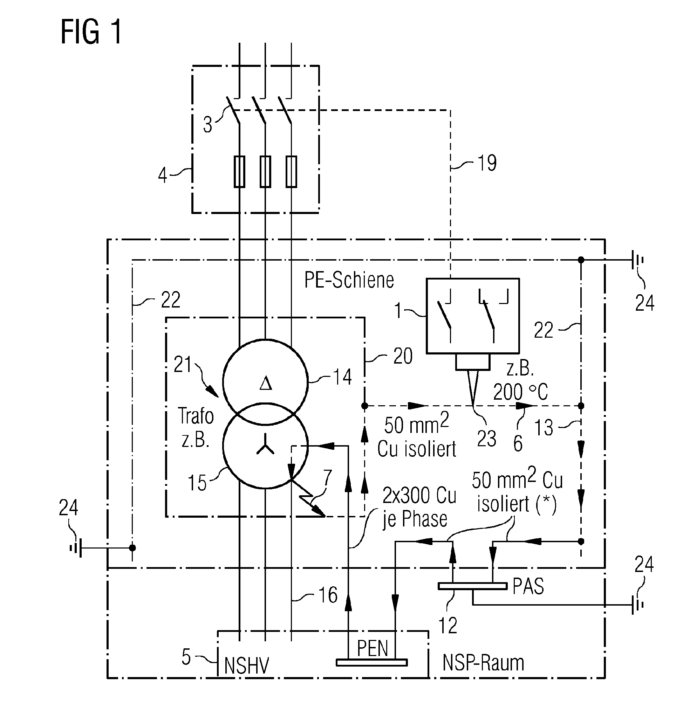

Die Figur 1 zeigt in einer vereinfachten Darstellung eine Erdungsvorrichtung für einen Transformator 21 in einer Transformatorstation 2. Der Transformator 21 besitzt eine Primärwicklung 14 und eine Sekundärwicklung 15, die in einem Transformatorgehäuse 20 untergebracht sind. Die Primärwicklung 14 ist in Dreieckschaltung, die Sekundärwicklung 15 in Sternschaltung geschaltet. Der Transformator 21 übersetzt die Hochspannung von 20 kV auf 400 V Niederspannung. Die primärseitige Verbindung des Transformators 21 zu einem nicht näher dargestellten Energieversorgungsnetz erfolgt über einen außerhalb der Transformatorstation 2 angeordneten Sicherungs-Lasttrennschalter 3 und über Hochspannungs-Hochleistungs-Sicherungen 4. Sekundärseitig führen die Leiter 16 des Transformators 21 in den Niederspannungsraum (NSP-Raum) der Transformatorstation 2 und von dort zu nicht näher dargestellten elektrischen Verbrauchern. Wie in der Figur 1 dargestellt, befinden sich die Erdungspunkte 24 nicht in unmittelbarer Nähe des Transformatorgehäuses 20, sondern örtlich davon getrennt.

Unter einem Erdungspunkt 24, oder kurz Erder, sind ein leitfähiges Teil oder mehrere leitfähige Teile zu verstehen, die in gutem Kontakt mit Erde sind und mit dieser eine elektrische Verbindung bilden. Erde wird durch das leitfähige Erdreich gebildet, dessen elektrisches Potenzial an jedem Punkt vereinbarungsgemäß gleich Null gesetzt werden kann.

Unter einer Erdungsleiter-Struktur 22, oder kurz Erdleiter 22, im Folgenden die Gesamtheit einer Leiteranordnung zu verstehen, die ein zu erdendes Teil einer elektrischen Maschine, z.B. dem Trafogehäuse, mittelbar oder unmittelbar mit Erdern oder Erdungspunkten 24 verbindet.

Die in Figur 1 dargestellte Erdungsvorrichtung besteht also im Wesentlichen aus Erdleiter 22 die jeweils zu drei

Erdungspunkten 24 führen. Die Erdleiter 22 sind als 125 mm² Aluminium-Schiene (PE-Schiene) beziehungsweise 50 mm² Kupferleiters ausgebildet. Das Transformatorgehäuse 20 ist mittels der Potenzialausgleichsleitung 6 mit dem Erdleiter 22 verbunden. Der Potentialausgleichsleiter 6 ist ein Kupferleiter mit einem Querschnitt von 50 mm².

Im Falle eines Erdkurzschlusses zwischen einem Leiter 16 der Sekundärseite des Transformators 21 und dem Transformatorgehäuse 20 (in Figur 1 ist dies mit dem Pfeil 7 angedeutet) fließt ein Erdkurzschlussstrom, dessen Strompfad 13 in Figur 1 mit Pfeilen eingezeichnet ist. Der Strompfad 13 führt vom Transformatorgehäuse 20 über den Potentialausgleichsleiter 6 und über Erdungssschiene 22 hin zu einer Potenzial-Ausgleichschiene 12 (PAS) und von dort über eine weitere Potenzial-Ausgleichschiene (PEN) im Niederspannungsraum (NSP-Raum) zurück zum Sternpunkt des Transformators 21. Kommt es nun zu einer durch den Erdkurzschlussstrom verursachten Unterbrechung dieser Erdungsvorrichtung, so entsteht das eingangs bereits erwähnte Gefährdungspotenzial, da das Transformatorgehäuse 20 dann unter Spannung steht.

Gemäß der Erfindung wird nun der im Fehlerfall in diesem Strompfad 13 fließende elektrische Erdkurzschlussstrom mittels eines Strahlungsthermometers 1 mit Grenzwertüberwachung überwacht und so frühzeitig abgeschaltet, dass es nicht zur Zerstörung der Erdungsanlage kommen kann. Die Temperaturmessung erfolgt in einem Überwachungsabschnitt 23 des Potentialausgleichsleiters 6 der Erdungsanlage, der im Vergleich zu den anderen Erdungsleitern 22 einen niedrigen Leitungs-Querschnitt aufweist. Hier ist im Fehlerfall aufgrund des geringen Querschnitts eine große Erwärmung zu erwarten. Das Strahlungsthermometer 1 misst die Emission dieser Wärmestrahlung 17. Durch diese Temperaturüberwachung der Erdungsanlage kann bereits innerhalb von einigen Millisekunden ein Erdkurzschluss diktiert und abgeschaltet werden, bevor es zu einem Schaden der Erdungsvorrichtung kommt.

Sobald eine Grenzwertüberschreitung erkannt ist, erzeugt das Strahlungsthermometer 1 ein Abschaltsignal und übermittelt dieses über den Signalpfad 19 zum Lasttrennschalter 3 in der Hochspannungsanlage (HS-Anlage). Der Lasttrennschalter 3 bewirkt nach Empfang des Abschaltsignals eine Trennung vom Energieversorgungsnetz. Die Erdungsvorrichtung ist dadurch vor Überbeanspruchung geschützt. Durch die Erfindung lässt sich eine Reaktionszeit von kleiner als 100 ms erreichen.

Mit einer Ausführung des Strahlungsthermometers als so genanntes Hochgeschwindigkeits-Pyrometer 1 kann die Wärmestrahlung und/oder Anstieggeschwindigkeit der Wärmestrahlung - und damit auch die Anstiegsgeschwindigkeit des Stromes im Fehlerfall - nahezu verzögerungsfrei in wenigen Millisekunden erfasst werden. Die kurze Anstiegzeit dieser Messeinrichtung 1 bringt mit sich, dass die Erdungsvorrichtung viel schneller als es bislang möglich war von der Energieversorgung getrennt werden kann. Infolge davon kann bei der Bemessung der Erdungsanlagen der Leitungsquerschnitt der Erdleiter 22 (PE Schien; im dargestellten Beispiel eine 125 mm² Aluminiumsschiene) entsprechend kleiner ausgeführt werden und muss nicht mehr für den Dauerkurzschlussstrom dimensioniert werden. Die Erdungsanlage wird in der Herstellung dadurch billiger.

Eine Hochgeschwindigkeits-Pyrometer 1 ist gemessen an dem Aufwand eines großen Leitungsquerschnittes der Erdungsanlage vergleichsweise billig.

Wie bereits gesagt, kann die Grenzwertüberwachung eine Überwachung eines Temperaturgrenzwertes z.B. 200°C sein, oder durch den Gradient der Anstieggeschwindigkeit der Temperatur des Leiters im Überwachungsabschnitt 23 vorgegeben sein.

Im dargestellten Ausführungsbeispiel wird ein Abschaltsignal erzeugt, sobald die Temperatur des Leiters 6 einen am Strahlungsthermometer 1 eingestellten Grenzwert Z.B in einem Intervall zwischen 150 °C und 300 °C, besonders bevorzugt von etwa 200°C überschreitet.

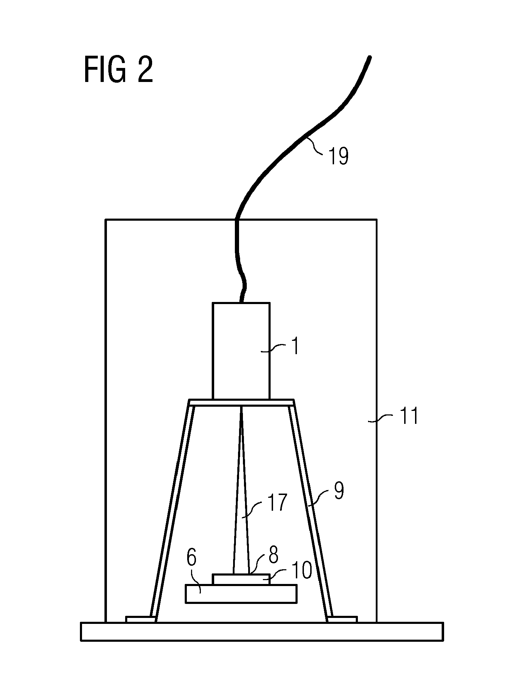

Die Figur 2 zeigt in einer stark vereinfachten Darstellung ein Strahlungsthermometer 1, welches auf einem Gestell 9 ortsfest montiert und in einem Gehäuse 24 aus einem Metall angeordnet ist. Die Messeinrichtung 1 befindet sich in der Transformatorstation 2 und ist vom zu überwachenden Erdleiter galvanisch getrennt. Der durch das Gestell 9 vorgegebene Abstand zwischen Strahlungsthermometer 1 und Potentialausgleichsleiter 6 ist so bemessen, dass die mit einem Erdkurzschlussstrom einhergehende Ausbildung eines magnetischen Feldes nicht zu einer Funktionsstörung des Strahlungsthermometers 1 führt. Die Energieversorgung des Strahlungsthermometers 1 erfolgt im dargestellten Ausführungsbeispiel von der Niederspannungsanlage 5 der Transformatorstation 2. Die Energieversorgung ist mit einer in Figur 1 nicht näher dargestellten Batterie gepuffert.

Der Messerkopf des Strahlungsthermometers 1 zeigt nach unten auf den Potenzialausgleichsleiters 6. Das Strahlungsthermometer 1 ist so eingerichtet, dass die im Überwachungsabschnitt 23 des Potentialausgleichsleiters 6 abgestrahlte Wärme 17 messtechnisch erfasst wird. Diese Wärmestrahlung 17 wird im Falle eines Erdkurzschlusses schnell ansteigen. Sobald ein im Strahlungsthermometer 1 eingestellter Grenzwert (Temperatur oder Temperaturanstieg) überschritten wird, - wird wie bereits oben gesagt -, ein Abschaltsignal erzeugt und über den Signalpfad 19 an den Lasttrennschalter 3 (Figur 1) übermittelt. Diese Informationsübermittlung auf den Signalpfad 19 kann leitungsgebundenen sein, oder auch drahtlos durch ein Funksignal erfolgen.

Der Überwachungsabschnitt 23 der Potenzialausgleichschiene 6 ist mit Emissionsstreifen 8 versehen, der flexibel ist so dass er mittels eines wärmeleitenden Klebers oder einer Wärmeleitpaste 10 auf einem Rund- oder Flachleiter leicht befestigt werden kann. Dieser Emissionsstreifen 8 hat die Eigenschaft, eine Wärmestrahlung 17 definierter Wellenlänge auszusenden, sobald der Erdungsleiter 6 einen Erdkurzschlussstrom führt. Dadurch wird erreicht, dass im Fehlerfall stets eine Wärmestrahlung 17 definierter Wellenlänge beziehungsweise Emissionseigenschaft ausgesendet wird, wodurch die emittierte Wärmestrahlung 17 unabhängig von Material und Oberfläche des Leiters 6 wird.

Ein wesentlicher Vorteil der Erfindung ist darin zu sehen, dass mit vergleichsweise geringen technischen Mitteln eine Sicherheitslücke bei Verteiltransformator in Trafostationen geschlossen werden kann. Fernerhin ist es leicht möglich, bestehende Transformatorstationen mit der erfindungsgemäßen Messeinrichtung nachträglich auszustatten.

Obwohl die Erfindung im Detail durch das oben dargestellte bevorzugte Ausführungsbeispiel einer Ortsnetztransformatorstation näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

So kann die Erfindung auch allgemein zum thermischen Schutz eines beliebigen elektrischen Leiters verwendet werden.

### Liste der verwendeten Bezugszeichen

- 1: Strahlungsthermometer
- 2: Transformatorstation
- 3: Sicherungs-Lasttrennschalter, Abschaltungseinrichtung
- 4: Hochspannung-Hochleistungs-Sicherung
- 5: Niederspannungsanlage
- 6: Potenzialausgleichsleiter
- 7: Erdkurzschluss
- 8: Emissionsschicht, Emissionsstreifen
- 9: Gestell
- 10: Wärmeleitpaste
- 11: Gehäuse
- 12: Potenzialausgleichschiene
- 13: Kurzschluss-Strompfad
- 14: Primärwicklung des Transformators
- 15: Sekundärwicklung des Transformators
- 16: Leiter des Transformators
- 17: Wärmestrahlung
- 19: Signalpfad
- 20: Transformatorgehäuse
- 21: Transformator
- 22: Erdungsleiter-Struktur, Erdleiter
- 23: Überwachungsabschnitt
- 24: Erde, Erdungspunkt

## Patentansprüche

1. Überstrom-Schutzvorrichtung für eine Erdungsvorrichtung einer elektrischen Maschine, insbesondere eines Transformators (21) in einer Transformatorstation, umfassend:
- eine Erdungsleiter-Struktur (22),
- eine Erfassungseinrichtung (1), die den im Falle eines Kurzschlusses zwischen einem stromführenden Leiter (16) und einem Anlagenteil (20) der elektrischen Maschine in der Erdungsleiter-Struktur (22) fließenden Erdkurzschlussstrom erfasst und ein Abschaltsignal erzeugt,
- eine Abschalteinrichtung (3), der das Abschaltsignal zugeführt ist, um im Falle eines Erdkurzschlusses die elektrische Maschine von der Energiezufuhr zu trennen,
**dadurch gekennzeichnet,**
**dass** die Erfassungseinrichtung (1) ein Strahlungsthermometer aufweist, welches zum Erfassen der im Falle eines Erdkurzschlusses in einem Überwachungsabschnitt (23) der Erdungsleiter-Struktur (22) erzeugten Wärmestrahlung (17) eingerichtet ist.

2. Vorrichtung nach Anspruch 1, **dadurch gekennzeichnet, dass**, der Überwachungsabschnitt (23) auf einem Potentialausgleichsleiter (6) angeordnet ist, durch welchen eine leitfähige Verbindung zwischen dem Anlagenteil (20) und der Erdungsleiter-Struktur (22) hergestellt ist.

3. Vorrichtung nach Anspruch 1 oder 2, **dadurch gekennzeichnet, dass** die Erfassungseinrichtung (1) dazu eingerichtet ist, die Änderungsgeschwindigkeit der Wärmestrahlung (17) zu erfassen und das Abschaltsignal erzeugt, sobald ein vorgegebener Schwellwert überschritten ist.

4. Vorrichtung nach Anspruch 2 oder 3, **dadurch gekennzeichnet, dass** im Überwachungsabschnitt (23) der Potenzialausgleichsleiter (6) einen Querschnitt aufweist, der kleiner ist als der Querschnitt der übrigen Leiter der Erdungsleiter-Struktur (22).

5. Vorrichtung nach Anspruch 2 oder 3, **dadurch gekennzeichnet, dass** im Überwachungsabschnitt (23) der Potentialausgleichsleiter (6) im Bereich des Überwachungsabschnitts (23) mit einer Emissionsschicht (8) wärmeleitend verbunden ist.

6. Vorrichtung nach Anspruch 4, **dadurch gekennzeichnet, dass** die Emissionsschicht (8) streifenförmig ausgebildet ist und mittels einer wärmeleitenden Schicht (10) mit dem Potenzialausgleichsleiter (6) verbunden ist.

7. Vorrichtung nach Anspruch 6, **dadurch gekennzeichnet, dass** die Emissionsschicht (8) flexibel ist, so dass sie zur Anbringung auf einem Flachleiter oder Rundleiter geeignet ist.

8. Vorrichtung nach einem der Ansprüche 1 bis diese 7,
**dadurch gekennzeichnet, dass** das Strahlungsthermometer (1) in einem Gehäuse (11) angeordnet ist, wobei das Gehäuse (11) als elektromagnetischer Schirm ausgebildet ist und/oder hermetisch abgedichtet ist.

9. Vorrichtung nach einem der Ansprüche 1 bis 7, **dadurch gekennzeichnet, dass** der Querschnitt des Potenzialausgleichsleiters (6) zumindest im Überwachungsabschnitt (23) kleiner als 50 mm² ist und als Kupferleiter ausgebildet ist.

10. Verfahren zur Ausnutzung der thermischen Belastungsgrenze einer Erdungsvorrichtung, welche zum Schutz einer elektrischen Maschine (21), insbesondere eines Transformators in einer Transformatorstation vorgesehen ist, umfassend folgende Schritte:
- Erfassen der Wärmestrahlung (17), die im Falle eines Erdkurzschlusses von einem Überwachungsabschnitt (23) eine Erdungsleiter-Struktur (22) der Erdungsvorrichtung abgestrahlt wird, wobei ein Wärmestrahlungsthermometer (1) verwendet wird;
- Erzeugen eines Abschaltsignals durch das Wärmestrahlungsthermometer (1), sobald die Wärmestrahlung (17) einen vorgebbaren Schwellwert überschreitet;
- Übermitteln des Abschaltsignals an eine Abschaltungsrichtung (3), um im Falle eines Erdkurzschlusses die Energiezufuhr zur elektrischen Maschine (21) zu trennen.

11. Verfahren nach Anspruch 10, **dadurch gekennzeichnet, dass** das Abschaltsignal bei Überschreiten einer vorgebbaren Grenztemperatur von etwa 150°C bis 300°C erzeugt wird.

12. Verfahren nach Anspruch 10, **dadurch gekennzeichnet dass** das Abschaltsignal beim Erreichen eines vorgebbaren Schwellwertes der Anstieggeschwindigkeit der Wärmestrahlung (17) erzeugt wird.

13. Verfahren nach einem der Ansprüche 10 bis 12,
**dadurch gekennzeichnet, dass** das Wärmestrahlungsthermometer (1) von einer Niederspannungsanlage (5) der Transformatorstation (2) mit elektrischer Energie versorgt wird.

14. Verfahren nach Anspruch 10, **dadurch gekennzeichnet, dass** das Wärmestrahlungsthermometer (1) über den Signalpfad (19) mit einer örtlich entfernten Zentrale verbunden ist und von dort die erfasste Wärmestrahlung kontinuierlich oder intervallweise abgefragt wird.

15. Verfahren zum Umrüsten einer Erdungsvorrichtung, bei dem ein Strahlungsthermometer (1) zum Einsatz gebracht wird, welches zum Erfassen der im Falle eines Erdkurzschlusses in einem Überwachungsabschnitt (23) eines Erdleiters (22) oder Potenzialausgleichleiters (6) erzeugten Wärmestrahlung (17) eingerichtet ist.

16. Verfahren zum Schutz eines stromführenden Leiters vor Überstrom, wobei mittels eines Strahlungsthermometers (1), welches die Oberflächentemperatur des Leiters in einem Überwachungsabschnitt (23) misst, bei überschreiten eines vorgebbaren Grenzwertes der Oberflächentemperatur ein Abschaltsignal erzeugt wird, welches zum Zwecke der Unterbrechung der Energiezufuhr zum Leiter einer Abschalteinrichtung (3) zugeführt wird.
